(19) Europäisches Patentamt
European Patent Office
Office européen des brevets

(11) EP 1 046 644 B1

(12) **EUROPÄISCHE PATENTSCHRIFT**

(45) Veröffentlichungstag und Bekanntmachung des Hinweises auf die Patenterteilung:
**10.12.2003 Patentblatt 2003/50**

(51) Int Cl.[7]: **C07F 7/12**, B01J 19/18

(21) Anmeldenummer: **00106369.2**

(22) Anmeldetag: **24.03.2000**

(54) **Verfahren zur Herstellung von Vinylchlorsilanen**

Process for preparing vinylchlorosilanes

Procédé de préparation de vinylchlorosilanes

(84) Benannte Vertragsstaaten:
**AT BE CH CY DE DK ES FI FR GB GR IE IT LI LU MC NL PT SE**

(30) Priorität: **22.04.1999 DE 19918114**

(43) Veröffentlichungstag der Anmeldung:
**25.10.2000 Patentblatt 2000/43**

(73) Patentinhaber: **Degussa AG**
**40474 Düsseldorf (DE)**

(72) Erfinder:
- **Bade, Stefan, Dr.**
  **79618 Rheinfelden (DE)**
- **Kesper, Bernt, Dr.**
  **79664 Wehr (DE)**
- **Köll, Robert**
  **79618 Rheinfelden (DE)**
- **Rauleder, Hartwig, Dr.**
  **79618 Rheinfelden (DE)**
- **Schön, Uwe, Dr.**
  **79618 Rheinfelden (DE)**

(56) Entgegenhaltungen:
**DE-A- 2 002 258**
**DE-A- 2 210 189**
**DE-A- 4 001 820**
**DE-A- 4 016 021**
**US-A- 4 175 871**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 046 644 B1

Printed by Jouve, 75001 PARIS (FR)

## Beschreibung

Die Erfindung betrifft ein Verfahren zur Herstellung von Vinylchlorsilanen durch unkatalysierte, thermische Reaktion von Chlorsilanen mit Vinylchlorid unter Verwendung einer Reaktorkombination aus einem Ringspaltreaktor mit gegebenenfalls rotierendem Verdrängerkörper und einem nachgeschalteten Reaktor ohne bewegte Teile.

## Stand der Technik

Vinyltrichlorsilan ist ein wertvolles Zwischenprodukt, das sich aufgrund seiner vier reaktionsfähigen Gruppen für viele Anwendungen eignet, beispielsweise bei der Schlichtung von Glasfasern und für die Herstellung von Kabelmaterialien verwendet wird.

Aus DE-PS 936 445, DE-OS 22 10 189 und insbesondere DE-PS 20 02 258 ist bekannt, daß beim Durchleiten von Vinylchlorid-Chlorsilan-Gemischen und insbesondere von Vinylchlorid-Trichlorsilan-Gemischen durch entsprechend aufgeheizte leere Rohre aus Keramik, Glas oder Eisen technisch akzeptable Ausbeuten an Vinylchlorsilanen erhalten werden. Die Reaktion verläuft rein thermisch, also ohne Katalysator. Bei der Umsetzung von Trichlorsilan mit Vinylchlorid laufen die folgenden Reaktionen ab:

$$\text{Hauptreaktion}: C_2H_3Cl + SiHCl_3 \rightleftharpoons C_2H_3SiCl_3 + HCl$$

Neben dieser Gleichgewichtsreaktion gibt es die folgenden Neben- und Folgereaktionen:

$$C_2H_3Cl + SiHCl_3 \rightarrow SiCl_4 + C_2H_4$$

$$4\ SiHCl_3 \rightarrow 3\ SiCl_4 + Si + 2\ H_2$$

$$C_2H_3Cl \rightarrow C_2H_2 + HCl$$

$$C_2H_2 \rightarrow 2\ C + H_2$$

$$C_2H_4 + SiHCl_3 \rightarrow C_2H_5SiCl_3$$

$$C_2H_4 + SiHCl_3 \rightarrow C_2H_3SiCl_3 + H_2$$

$$C_2H_3SiCl_3 + SiHCl_3 \rightarrow Cl_3SiC_2H_4SiCl_3$$

Trotz dieser Neben- und Folgereaktionen beträgt nach DE 40 01 820 A1 die Selektivität für Vinyltrichlorsilan, bezogen auf das im Unterschuß eingesetzte Vinylchlorid, je nach dem Verhältnis der Edukte und dem Umsatzgrad 50 bis 98%, bei Rohren von 122 bis 150 cm Länge und Durchmessern von 25 bis 35 mm, Verweilzeiten von 0,2 bis 20 Sekunden, Reaktionstemperaturen von 400 bis 750°C und Drücken von 1 bis 3 bar. Dabei beträgt jedoch die Reaktorleistung (oder Kapazität) der Reaktoren nur 0,8 bis 3,2 t Vinyltrichlorsilan/Monat. Selektivität und Umsatzgrad verhalten sich zueinander umgekehrt proportional; die Reaktorleistung durchläuft ein Maximum in Abhängigkeit vom Umsatzgrad. Eine hohe Selektivität geht dementsprechend mit einer ungenügenden, wirtschaftlich nicht akzeptablen Reaktorleistung bei geringem Umsatzgrad einher. Gemäß DE-OS 20 02 258 bringt zwar die Vergrößerung des Rohrdurchmessers bis auf 50 mm eine dem größeren Reaktorvolumen proportionale Steigerung der Reaktorleistung. Bei noch größeren Durchmessern geht jedoch die spezifische Reaktorleistung, bezogen auf das Reaktorvolumen, zurück. Es ist also nicht möglich, die Raum-Zeit-Ausbeute an Vinyltrichlorsilan zu erhöhen oder auch nur zu halten, indem man den Durchmesser des Reaktorrohres über 50 mm hinaus vergrößert.

Ein verbessertes Verfahren zur Herstellung von Vinylchlorsilanen durch Umsetzung von Chlorsilanen mit Vinylchlorid wird gemäß DE 40 01 820 A1 in einem Ringspaltreaktor durchgeführt, der ein beheizbares Reaktionsrohr mit einem Innendurchmesser $d_1$ aufweist, in dessen Innerem sich ein über die gesamte Länge des Reaktionsrohres

erstreckender, axialsymmetrisch angeordneter und gegebenenfalls rotationsfähiger Verdrängerkörper mit einem Außendurchmesser $d_2$ befindet. Dabei gilt die Beziehung $d_1 = d_2 + 2 \cdot a$, wobei a im allgemeinen mindestens 1 cm beträgt und stets <5 cm ist. Falls der Verdrängerkörper wesentlich kürzer ist als das Reaktionsrohr, wird die Ausbeute vermindert. Dieser Befund entspricht der Lehre der drei zuvor genannten Schriften, wonach bei Leerrohrreaktoren die Ausbeute abfällt, wenn der Rohrdurchmesser 5 cm überschreitet. Nach DE 40 16 021 A1 läßt sich die Kapazität des Reaktors bzw. die Raum-Zeit-Ausbeute des Verfahrens mit einem Ringspaltreaktor weiter steigern, wenn man die Reaktionskomponenten vor dem Eintritt in den Reaktor auf 120 bis 400°C vorwärmt. Aber auch mit dieser Maßnahme geht noch viel Reaktorvolumen verloren, in dem die Reaktionskomponenten auf ca. 550°C erhitzt werden, um dann im restlichen Reaktorvolumen adiabatisch weiterzureagieren.

Es wurde nun gefunden, daß sich Vinylchlorsilane durch thermische, nicht katalysierte Umsetzung von Chlorsilanen mit Vinylchlorid bei 550 bis 700°C unter Verwendung eines beheizten Ringspaltreaktors vorteilhaft herstellen lassen, wenn man die Reaktionsgase nach Durchströmen des Ringspaltraumes in einer zweiten Zone mit größerer Querschnittsfläche adiabatisch weiterreagieren läßt, wobei das Volumen dieser Zone sich zu dem Volumen des Ringspaltraumes wie 0,15:1 bis 1,5:1 verhält. Besonders vorteilhaft kühlt man die heißen Reaktionsgase am Ende dieser zweiten Zone rasch ab, indem man sie mit einer Flüssigkeit quencht.

Dementsprechend umfaßt eine Vorrichtung zur vorteilhaften Durchführung des Verfahrens eine Kombination aus einem beheizbaren Ringspaltreaktor, einen in Strömungsrichtung daran anschließenden zweiten Reaktor mit größerer Reaktorquerschnittsfläche, wobei das Volumen dieses Reaktors sich zu dem Volumen des Ringspaltraumes wie 0,15:1 bis 1,5:1 verhält, und gegebenenfalls eine Vorrichtung zum Quenchen mit einer Flüssigkeit.

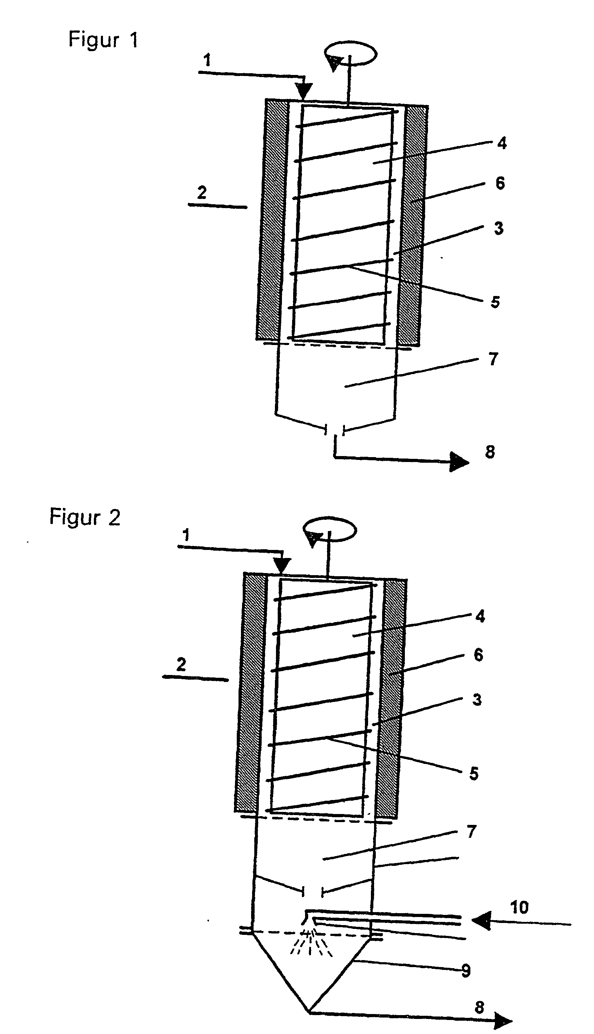

In der Figur 1 ist eine erfindungsgemäße Vorrichtung dargestellt, die einen Ringspaltreaktor sowie einen daran anschließenden Reaktor mit größerer Reaktorquerschnittsfläche umfaßt. Die Vorrichtung nach Figur 2 weist zusätzlich eine Quenchvorrichtung auf.

Bei dem neuen Verfahren verbindet sich auch bei hohen Umsatzgraden eine hohe Selektivität für das gewünschte Vinylchlorsilan mit einer wirtschaftlich akzeptablen hohen Reaktorleistung. Folge- oder Nebenreaktionen, die u.a. zur Abscheidung von Ruß und/oder elementarem Silicium sowie zur Bildung von Hochsiedern führen können, werden zurückgedrängt. Die vorteilhafte Wirkung der erfindungsgemäßen Aufteilung der Reaktion auf zwei Zonen bzw. zwei Reaktoren ist überraschend, weil ein wesentlicher Teil der Reaktion in einer Zone bzw. in einem Reaktor stattfindet, der die kritischen Parameter <50 mm Durchmesser (bei dem ersterwähnten Verfahren) bzw. <50 mm Spaltbreite (bei dem Verfahren nach DE 40 01 820 A1) bei weitem überschreitet.

Erf indungsgemäß läßt sich insbesondere Vinyltrichlorsilan aus Trichlorsilan und Vinylchlorid vorteilhaft herstellen. Andere geeignete Chlorsilane mit einem substituierbaren Wasserstoffatom sind z.B. Methylhydrogendichlorsilan und Ethylhydrogendichlorsilan.

Man setzt das Chlorsilan und Vinylchlorid vorteilhaft ohne ein verdünnendes flüssiges oder gasförmiges inertes Medium und im Molverhältnis von 1:1 bis 5:1, vorzugsweise von 2:1 bis 4:1 ein. Die Reaktionskomponenten können, wie in DE 46 16 021 A1 beschrieben, jeweils für sich oder im Gemisch auf 120 bis 400°C, vorteilhaft auf 220 bis 400°C vorerhitzt in den Ringspaltreaktor eingeführt werden, wo sie weiter erhitzt werden. Bei etwa 450°C setzt die exotherme Substitutionsreaktion ein, die bei etwa 550°C eine so hohe Geschwindigkeit erreicht, daß keine weitere Wärmezufuhr erforderlich ist, die Reaktion also im wesentlichen adiabatisch ablaufen kann. Die Zone bzw. der zweite Reaktor mit der größeren Reaktorquerschnittsfläche wird dementsprechend nicht beheizt. Infolge der Exothermie stellen sich Temperaturen von 550 bis 700°C, vorteilhaft von 550 bis 650°C ein.

Das erfindungsgemäße Verfahren wird zweckmäßig bei Drücken von 1,1 bis 2,0 bar, vorteilhaft von 1,1 bis 1,4 bar durchgeführt. Die Verweilzeiten betragen in der Regel 0,2 bis 20 sec, vorteilhaft 1,0 bis 10 sec. Sie verteilen sich auf die verschiedenen Zonen bzw. Reaktoren im Verhältnis von deren Volumina.

Als Ringspaltreaktor kann der in DE 40 01 820 A1 beschriebene Reaktor dienen. Dieser steht vorzugsweise senkrecht und umfaßt ein beheizbares zylindrisches Rohr mit einem gleich langen, axialsymmetrisch positionierten Verdrängerkörper, der fest angeordnet sein oder um seine Längsachse rotieren kann, z.B. mit 10 bis 100 U/min, vorteilhaft mit 20 bis 40 U/min. Ringspaltreaktoren für die Herstellung von Vinylchlorsilanen im technischen Maßstab können z.B. 1 bis 5 m lang sein. Die Innendurchmesser solcher Reaktoren können beispielsweise 400 bis 1.200 mm und vorteilhaft 500 bis 1.000 mm betragen.

Die Innenseite des zylindrischen Rohres und die Außenseite des Verdrängerkörpers bilden einen Ringspaltraum, in dem die Edukte auf die Starttemperatur erhitzt werden und die Reaktion stattfindet. Der Verdrängerkörper kann eine glatte Außenwand haben oder auf seiner gesamten Oberfläche bzw. einem Teil davon, beispielsweise beim Eintritt der Eduktgase beginnend, Elemente tragen, die die Strömungsgeschwindigkeit und/oder die Durchwirbelung der Reaktionsgase fördern und dadurch den Ringspaltraum von Ablagerungen fester Partikel freihalten. Bei den Elementen kann es sich z.B. um Metallstreifen handeln, die mit Unterbrechungen oder ununterbrochen im wesentlichen parallel zur Längsachse des Verdrängerkörpers laufen. Alternativ können die durchgehenden oder unterbrochenen Metallstreifen im spitzen Winkel von 20 bis 50° zur Längsachse angeordnet sein und dann eine Leitspirale bilden. Die Metallstreifen können auch als Stücke oder Noppen in regelmäßigen oder unregelmäßigen Abständen auf der Oberfläche des Verdrängerkörpers angebracht werden. Wenn ein Verdrängerkörper mit einer Leitspirale rotiert, dann geschieht dies zweckmäßig in einem solchen Drehsinn, daß die Leitspirale die Reaktionsgase in Richtung auf den Ausgang des Ringspaltreaktors fördert. Wenn die Metallstreifen keine Leitspirale bilden, sondern auf eine Weise angebracht sind, die in keinem Fall eine Förderung der Reaktionsgase bewirkt, kommt es auf die Drehrichtung nicht an.

Der Abstand zwischen der Innenwand des zylindrischen Rohres und der Außenwand des Verdrängerkörpers beträgt vorteilhaft mindesten 10 mm und höchstens 50 mm. Etwa vorhandene Elemente, die die Durchwirbelung fördern, ragen vorteilhaft um mehr als die halbe Spaltbreite in den Ringspalt hinein. Vorteilhaft erstrecken sie sich über 60 bis 80% der Spaltbreite.

Das zylindrische Rohr, der Verdrängerkörper und die Elemente, die die Durchwirbelung der Reaktionsgase fördern, können aus den verschiedensten Materialien bestehen, die unter den Reaktionsbedingungen beständig sind, z.B. aus zunderfesten Stählen, die neben Eisen als Legierungsbestandteile insbesondere Chrom, Nickel und Titan und/oder Molybdän und/oder Silicium enthalten.

Der Ringspaltreaktor ist der Startreaktor und ist mit einer regelbaren Heizvorrichtung versehen, die sich zweckmäßig über dessen ganze Länge erstreckt und in mehrere unabhängig beheizbare Segmente unterteilt sein kann. Es ist zwar möglich, die in den Ringspaltreaktor eintretenden, gegebenenfalls auf 120 bis 400°C vorerhitzen Eduktgase im Ringspaltreaktor so schnell aufzuheizen, daß die Temperatur etwa 550°C beträgt und die weitere Reaktion ohne Wärmezufuhr im wesentlichen adiabatisch abläuft, sobald die Reaktionsgase 1/3 bis 2/3 der Reaktorlänge passiert haben. Eine Heizvorrichtung auch im restlichen Teil sichert jedoch die erwünschte Flexibilität für den Fall, daß sich der Startpunkt der adiabatischen Reaktion in Richtung auf den Ausgang verschiebt. Die Heizung muß auf jeden Fall so eingestellt werden, daß die Reaktionsgase mit einer Temperatur von mindestens 550°C in den zweiten Reaktor eintreten. Die Reaktionsgase werden zweckmäßig indirekt erhitzt, also durch Wärmeübertragung durch die Wand des zylindrischen Rohres. Beispielsweise kann das zylindrische Rohr mit einem gegebenenfalls unterteilten Mantel versehen sein, durch den überhitzter Dampf oder eine hoch beanspruchbare Wärmeträgerflüssigkeit (z.B. eine Salzschmelze oder Flüssigmetall) geleitet werden kann. Vorteilhaft ist jedoch das zylindrische Rohr mit einer gegebenenfalls in Segmente unterteilten elektrischen Außenheizung ausgestattet.

An den Ringspaltreaktor schließt sich ein vorzugsweise zylindrischer zweiter Reaktor bzw. eine zweite Zone an, der bzw. die eine größere Querschnittsfläche aufweist als die Querschnittsfläche des Ringspalts im Ringspaltreaktor und in dem bzw. in der die Reaktion adiabatisch in Richtung auf das Gleichgewicht fortschreitet. Dieser Reaktor bzw. diese Zone wird also nicht beheizt. Im allgemeinen ist die Querschnittsfläche dieses zweiten Reaktors bzw. dieser zweiten Reaktionszone 5 bis 15 mal größer als die des Ringspaltraumes im Ringspaltreaktor. Der zweite Reaktor ist im allgemeinen leer, er enthält zumindest keinen Verdrängerkörper und keine anderen bewegten Teile. Es ist ein wichtiges Merkmal des erfindungsgemäßen Verfahrens bzw. Reaktors, daß die Volumina des zweiten Reaktors bzw. der zweiten Zone sich zu dem Volumen des Ringspaltraumes wie 0,15:1 bis 1,5:1, vorteilhaft wie 0,5:1 bis 1,25:1 verhalten. Der zweite Reaktor kann aus den gleichen Materialen bestehen wie der Ringspaltreaktor.

Wenn dem zweiten Reaktor nicht unmittelbar eine Quenchvorrichtung angefügt ist, weist der zweite Reaktor vorteilhaft auf der dem Ringspaltraum des ersten Reaktors gegenüberliegenden Seite einen zentralen Auslaß mit einem Durchmesser d auf, der zum Innendurchmesser D des zweiten Reaktors im Verhältnis 1:3 bis 1:20 steht. Hierdurch wird in Verbindung mit einer Leitspirale auf dem Verdrängerkörper eine stabile Drallströmung erzeugt, die etwaige Feststoffpartikel sofort aus dem zweiten Reaktor austrägt.

Nach Passieren der zweiten Reaktionszone werden die heißen Reaktionsgase vorteilhaft mit einer Flüssigkeit gequencht. Dadurch wird die Reaktorleistung weiter verbessert. Die Quenchvorrichtung kann in den zweiten Reaktor integriert sein und sollte jedenfalls nicht weiter als etwa 1,5 m vom Ausgang des zweiten Reaktors entfernt sein. Bewährt hat sich ein konischer Quenchbehälter aus einem unter den Verfahrensbedingungen beständigen Material, der mit seiner kreisförmigen Öffnung unmittelbar an den zylindrischen zweiten Reaktor anschließt. Die Quenchflüssigkeit kann z.B. durch eine Düse oder mehrere Düsen mit einem Durchmesser von 8 bis 25 mm in Strömungsrichtung kegelförmig in die heißen Reaktionsgase eingedüst werden.

Als Quenchflüssigkeit eignet sich z.B. Trichlorsilan oder Siliciumtetrachlorid, das erwünschte Vinylchlorsilan, wie z.B. Vinyltrichlorsilan, oder auch das rohe kondensierte Reaktionsgemisch, das in der Regel 25 bis 50 Gew.-% an dem erwünschten Vinylchlorsilan enthält. Vorteilhaft beträgt der Massenstrom der Quenchflüssigkeit das Zwei- bis Sechsfache des Massenstromes der gasförmigen Reaktionsprodukte. Die verdampfende Quenchflüssigkeit kühlt die Reaktionsgase, deren Temperatur am Ende der zweiten Reaktionszone bzw. am Ausgang des zweiten Reaktors 570 bis 650°C beträgt, rasch auf eine Temperatur von $<200$°C ab, so daß sich die Gleichgewichtslage praktisch nicht mehr ändert und unerwünschte Folgereaktionen praktisch nicht mehr stattfinden. Die gequenchten Reaktionsgase werden indirekt weiter abgekühlt und verflüssigt. Aus der flüssigen Phase gewinnt man das gewünschte Vinylchlorsilan durch Destillation.

Eine Reaktorkombination ohne Quench zur Durchführung des erfindungsgemäßen Verfahrens ist in **Figur 1** dargestellt. Das Gemisch der Ausgangsstoffe **1** wird am Kopf des senkrecht stehenden Ringspaltreaktors **2** mit dem Ringspalt **3** eingeleitet. Der Reaktor hat einen drehbaren Verdrängerkörper **4**, auf dem eine Leitspirale **5** angebracht

ist. Der Ringspaltreaktor **2** ist durch die elektrische Heizung **6** beheizbar. Auf den Ringspaltreaktor **2** folgt der leere, unbeheizbare und keine beweglichen Teile enthaltende zweite Reaktor **7**, an dessen Austritt das Reaktionsgemisch **8** abgenommen wird.

Eine Reaktorkombination mit Quench ist in **Figur 2** dargestellt. Sie unterscheidet sich von der Reaktorkombination der Figur 1 dadurch, daß sich an den zweiten Reaktor **7** ein konisches Quenchgefäß **9** anschließt, das eine Quenchvorrichtung **10** enthält.

Die Erfindung wird durch die folgenden Beispiele weiter erläutert, die jedoch nicht ihren Umfang begrenzen sollen, wie er in den Patentansprüchen definiert ist.

**Beispiel 1**

Man verwendet eine Reaktorkombination gemäß Figur 1. Der senkrecht stehende technische Ringspaltreaktor umfaßt ein von außen elektrisch beheizbares zylindrisches Rohr von 2,0 m Länge mit einem inneren Durchmesser von 600 mm sowie einen Verdrängerkörper von ebenfalls 2,0 m Länge mit einem äußeren Durchmesser von 560 mm. Auf den Verdrängerkörper ist eine Leitspirale mit einer Höhe von 13 mm aufgebracht, die mit der Längsachse einen Winkel von 40° bildet. Der Ringspaltraum ist 20 mm breit; die Querschnittsfläche des Ringspaltraumes beträgt 3,6 $dm^2$; das Ringspaltvolumen 72,9 $dm^3$. An den Ringspaltreaktor schließt sich ein zweiter, zylindrischer leerer Reaktor von 0,5 m Länge mit einem innerem Durchmesser D von ebenfalls 600 mm an, dessen Querschnittsfläche 28,3 $dm^2$ und dessen Volumen 141,4 $dm^3$ beträgt. Das Verhältnis der Volumina des Ringspaltreaktors und des zweiten Reaktors beträgt 0,52:1, die Querschnittsfläche des zweiten Reaktors ist 7,9 mal größer als die des Ringspaltraumes. Der zweite Reaktor hat einen kreisrunden Auslaß nit einem Innendurchmesser d von 100 mm. Das Verhältnis D:d beträgt 6:1.

Dem Ringspaltreaktor wird am Kopf ein auf 220°C erhitztes gasförmiges Gemisch von 420 kg/h Trichlorsilan und 70 kg/h Vinylchlorid zugefügt; das molare Verhältnis der Einsatzstoffe beträgt 2,77. Der Ringspaltreaktor wird so beheizt, daß sich in dem adiabatischen zweiten Reaktor eine Temperatur von 580°C einstellt.

Das Reaktionsgemisch hat am Ausgang des zweiten Reaktors die folgende Zusammensetzung.

| Komponente | Mengenstrom (kg/h) |
|---|---|
| Vinylchlorid | 9,8 |
| Trichlorsilan | 274,8 |
| Vinyltrichlorsilan | 138,5 |
| Chlorwasserstoff | 32,2 |
| Siliciumtetrachlorid | 20,8 |
| Hochsieder und weitere Nebenkomponenten | 15,5 |

Hieraus ergibt sich ein Vinylchlorid-Umsatz von 86% und eine Vinyltrichlorsilan-Selektivität, bezogen auf umgesetztes Vinylchlorid, von 89%. Die Produktionsleistung des Reaktors liegt bei 100 Tonnen Vinyltrichlorsilan pro Monat. Der Vinylchlorid-Umsatz entspricht annähernd dem theoretisch ermittelten Gleichgewichtsumsatz von 87%.

**Beispiel 2**

Man verwendet die in Beispiel 1 beschriebene Reaktorkombination und setzt ein auf 240°C erhitztes gasförmiges Gemisch von 480 kg/h Trichlorsilan und 80 kg/h Vinylchlorid ein; das molare Verhältnis der Einsatzstoffe beträgt wiederum 2,77. Der Ringspaltreaktor wird so beheizt, daß sich in dem adiabatischen zweiten Reaktor eine Temperatur von 588°C einstellt.

Das Reaktionsgemisch hat am Ausgang des zweiten Reaktors die folgende Zusammensetzung.

| Komponente | Mengenstrom (kg/h) |
|---|---|
| Vinylchlorid | 11,8 |
| Trichlorsilan | 311,2 |
| Vinyltrichlorsilan | 154,6 |
| Chlorwasserstoff | 34,9 |
| Siliciumtetrachlorid | 29,2 |
| Hochsieder und weitere Nebenkomponenten | 18,3 |

Hieraus ergibt sich ein Vinylchlorid-Umsatz von 85% und eine Vinyltrichlorsilan-Selektivität, bezogen auf umgesetztes Vinylchlorid, von 88%. Die Produktionsleistung des Reaktors liegt bei 111 Tonnen Vinyltrichlorsilan pro Monat.

**Beispiel 3**

Man verwendet die in Beispiel 1 beschriebene Reaktorkombination und setzt ein auf 260°C erhitztes gasförmiges Gemisch von 540 kg/h Trichlorsilan und 90 kg/h Vinylchlorid ein; das molare Verhältnis der Einsatzstoffe beträgt wiederum 2,77. Der Ringspaltreaktor wird so beheizt, daß sich in dem zweiten, adiabatischen Reaktor eine Temperatur von 601°C einstellt.

Das Reaktionsgemisch hat am Ausgang des zweiten Reaktors die folgende Zusammensetzung.

| Komponente | Mengenstrom (kg/h) |
|---|---|
| Vinylchlorid | 13,6 |
| Trichlorsilan | 343,8 |
| Vinyltrichlorsilan | 172,1 |
| Chlorwasserstoff | 38,8 |
| Siliciumtetrachlorid | 37,9 |
| Hochsieder und weitere Nebenkomponenten | 23,8 |

Hieraus ergibt sich ein Vinylchlorid-Umsatz von 85% und eine Vinyltrichlorsilan-Selektivität, bezogen auf umgesetztes Vinylchlorid, von 87%. Die Produktionsleistung des Reaktors liegt bei 124 Tonnen Vinyltrichlorsilan pro Monat.

**Beispiel 4**

Man verwendet die in Beispiel 1 beschriebene Reaktorkombination und setzt ein auf 260°C erhitztes gasförmiges Gemisch von 600 kg/h Trichlorsilan und 100 kg/h Vinylchlorid ein; das molare Verhältnis der Einsatzstoffe beträgt wiederum 2,77. Der Ringspaltreaktor wird so beheizt, daß sich in dem zweiten, adiabatischen Reaktor eine Temperatur von 642°C einstellt.

Das Reaktionsgemisch hat am Ausgang des zweiten Reaktors die folgende Zusammensetzung.

| Komponente | Mengenstrom (kg/h) |
|---|---|
| Vinylchlorid | 14,8 |
| Trichlorsilan | 440,4 |
| Vinyltrichlorsilan | 142,7 |
| Chlorwasserstoff | 32,2 |
| Siliciumtetrachlorid | 47,8 |
| Hochsieder und weitere Nebenkomponenten | 22,1 |

Hieraus ergibt sich ein Vinylchlorid-Umsatz von 85% und eine Vinyltrichlorsilan-Selektivität, bezogen auf umgesetztes Vinylchlorid, von 65%. Die Produktionsleistung des Reaktors liegt bei 103 Tonnen Vinyltrichlorsilan pro Monat.

Dieses Beispiel zeigt im Vergleich zu den vorhergehenden Beispielen, daß infolge des höheren Durchsatzes und der höheren Temperatur im adiabatischen zweiten Reaktor die Produktionsleistung der Reaktorkombination und die Vinyltrichlorsilan-Selektivität herabgesetzt werden.

**Beispiel 5**

Man verwendet die in Beispiel 1 beschriebene Reaktorkombination, wobei jedoch auf dem Verdrängerkörper anstatt der Leitspirale 13 mm hohe Noppen mit 50 mm Durchmesser in unregelmäßigen Abständen von 10 bis 30 cm angeordnet sind. Man setzt ein auf 220°C erhitztes gasförmiges Gemisch von 420 kg/h Trichlorsilan und 70 kg/h Vinylchlorid ein; das molare Verhältnis der Einsatzstoffe beträgt wiederum 2,77. Bei gleicher Beheizung wie im Beispiel 2 stellt sich in dem zweiten, adiabatischen Reaktor eine Temperatur von 571°C ein.

Das Reaktionsgemisch hat am Ausgang des zweiten Reaktors die folgende Zusammensetzung.

| Komponente | Mengenstrom (kg/h) |
|---|---|
| Vinylchlorid | 16,1 |
| Trichlorsilan | 289,5 |
| Vinyltrichlorsilan | 123,9 |
| Chlorwasserstoff | 28,1 |
| Siliciumtetrachlorid | 18,5 |
| Hochsieder und weitere Nebenkomponenten | 13,9 |

Hieraus ergibt sich ein Vinylchlorid-Umsatz von 77% und eine Vinyltrichlorsilan-Selektivität, bezogen auf umgesetztes Vinylchlorid, von 89%. Die Produktionsleistung des Reaktors liegt bei 89 Tonnen Vinyltrichlorsilan pro Monat.

Dieses Beispiel zeigt im Vergleich zu Beispiel 1, daß die Noppen an Stelle der Leitspirale zu einer niedrigeren adiabatischen Temperatur und zu einem niedrigeren Vinylchlorid-Umsatz führen, während die Vinyltrichlorsilan-Selektivität unverändert bleibt.

**Beispiel 6 (Vergleichsbeispiel)**

Man verwendet einen senkrecht stehenden technischen Ringspaltreaktor ohne einen zweiten, adiabatischen Reaktor. Der Reaktor besteht aus einem von außen elektrisch beheizbaren zylindrischen Rohr von 2,5 m Länge mit einem inneren Durchmesser von 600 mm sowie einem Verdrängerkörper von ebenfalls 2,5 m Länge und einem Durchmesser von 560 mm. Auf dem Verdrängerkörper sind Noppen angebracht, wie in Beispiel 5 beschrieben. Der Ringspalt ist 20 mm breit.

Man setzt ein auf 220°C erhitztes gasförmiges Gemisch von 420 kg/h Trichlorsilan und 70 kg/h Vinylchlorid ein; das molare Verhältnis der Einsatzstoffe beträgt wiederum 2,77. Der Ringspaltreaktor wird so beheizt, daß sich 10 cm oberhalb des Austritts eine Temperatur von 578°C einstellt.

Das Reaktionsgemisch hat am Ausgang des zweiten Reaktors die folgende Zusammensetzung.

| Komponente | Mengenstrom (kg/h) |
|---|---|
| Vinylchlorid | 25,9 |
| Trichlorsilan | 311,1 |
| Vinyltrichlorsilan | 102,6 |
| Chlorwasserstoff | 23,1 |
| Siliciumtetrachlorid | 13,9 |
| Hochsieder und weitere Nebenkomponenten | 13,4 |

Hieraus ergibt sich ein Vinylchlorid-Umsatz von 63% und eine Vinyltrichlorsilan-Selektivität, bezogen auf umgesetztes Vinylchlorid, von 90%. Die Produktionsleistung des Reaktors liegt bei 74 Tonnen Vinyltrichlorsilan pro Monat. Die Vinyltrichlorsilan-Selektivität ist zwar hoch, der Vinylchlorid-Umsatz und die Reaktorleistung sind jedoch unbefriedigend.

**Beispiel 7**

Man verwendet eine Reaktorkombination gemäß Figur 2. Der Ringspaltreaktor besteht aus einem zylindrischen Rohr mit einem inneren Durchmesser von 600 mm und einem Verdrängerkörper mit einem äußeren Durchmesser von 560 mm, die jeweils 2,0 m lang sind. Auf den Verdrängerkörper ist eine Leitspirale mit einem Durchmesser von 13 mm aufgebracht, die mit der Längsachse einen Winkel von 40° bildet. Der Ringspalt ist 20 mm breit. Die Ringspaltquerschnittsfläche beträgt 3,6 $dm^2$, das Ringspaltvolumen 72,9 $dm^3$. An den Ringspaltreaktor schließt sich ein zweiter, nach unten konisch auslaufender Reaktor von 0,5 m Länge mit ebenfalls 600 mm innerem Durchmesser an. Die Querschnittsfläche dieses Reaktors beträgt am Übergang vom Ringspaltreaktor zum zweiten Reaktor 28,3 $dm^2$, das Volumen 142,4 $dm^3$. Das Verhältnis der Volumina des Ringspaltreaktors und des zweiten Reaktors beträgt 0,52:1, die Querschnittsfläche des zweiten Reaktors ist 7,9 mal größer als die des Ringspalts. Auf den zweiten Reaktor folgt das konische Quenchgefäß mit einer Quenchdüse.

Man setzt ein auf 350°C erhitztes gasförmiges Gemisch von 600 kg/h Trichlorsilan und 100 kg/h Vinylchlorid ein; das molare Verhältnis der Einsatzstoffe beträgt wiederum 2,77. Der Ringspaltreaktor wird so beheizt, daß sich im zweiten, adiabatischen Reaktor eine Temperatur von 635°C einstellt. Über die Quenchdüse werden 2.000 kg/h kondensiertes flüssiges Reaktionsgemisch eingeführt, wodurch die Temperatur des Reaktionsgemisches auf 82°C abgesenkt wird.

Das Reaktionsgemisch hat abzüglich des Quenchstromes die folgende Zusammensetzung.

| Komponente | Mengenstrom (kg/h) |
|---|---|
| Vinylchlorid | 14,9 |
| Trichlorsilan | 380,2 |
| Vinyltrichlorsilan | 193,3 |
| Chlorwasserstoff | 43,6 |
| Siliciumtetrachlorid | 51,8 |
| Hochsieder und weitere Nebenkomponenten | 16,2 |

Hieraus ergibt sich ein Vinylchlorid-Umsatz von 85% und eine Vinyltrichlorsilan-Selektivität, bezogen auf umgesetztes Vinylchlorid, von 88%. Die Produktionsleistung des Reaktors liegt bei 139 Tonnen Vinyltrichlorsilan pro Monat. Ein Vergleich mit Beispiel 4 zeigt, daß der Quench bei gleichem Vinylchlorid-Umsatz eine deutlich höhere Vinyltrichlorsilan-Selektivität und damit eine deutlich höhere Reaktorleistung bringt.

## Patentansprüche

1. Verfahren zur Herstellung von Vinylchlorsilanen durch thermische, nicht katalysierte Umsetzung von Chlorsilanen mit Vinylchlorid bei 550 bis 700°C unter Verwendung eines Ringspaltreaktors, **dadurch gekennzeichnet, daß** man die Reaktionsgase nach Durchströmen des Ringspaltraumes in einer zweiten Zone mit größerer Querschnittsfläche adiabatisch weiterreagieren läßt, wobei das Volumen dieser Zone sich zu dem Volumen des Ringspaltraumes wie 0,15:1 bis 1,5:1 verhält.

2. Verfahren nach Anspruch 1, **dadurch gekennzeichnet, daß** die Ringspaltzone durch einen in einem zylindrischen Rohr axialsymmetrisch angeordneten, gegebenenfalls rotationsfähigen Verdrängerkörper erzeugt wird.

3. Verfahren nach Anspruch 2, **dadurch gekennzeichnet, daß** der Verdrängerkörper Elemente trägt, die die Strömungsgeschwindigkeit und die Durchwirbelung der Reaktionsgase fördern.

4. Verfahren nach Anspruch 3, **dadurch gekennzeichnet, daß** die Elemente eine Spirale bilden oder Noppen sind.

5. Verfahren nach einem der Ansprüche 2 bis 4, **dadurch gekennzeichnet, daß** die Elemente eine Höhe haben, die 60 bis 80 % der Breite der Ringspaltzone beträgt.

6. Verfahren nach einem der Ansprüche 1 bis 5, **dadurch gekennzeichnet, daß** die Ringspaltzone 10 bis 50 mm breit ist.

7. Verfahren nach einem der Ansprüche 1 bis 5, **dadurch gekennzeichnet, daß** die Ringspaltzone 20 bis 50 mm breit ist.

8. Verfahren nach einem der Ansprüche 1 bis 7, **dadurch gekennzeichnet, daß** die zweite Reaktionszone auf der dem Ringspaltraum des ersten Reaktors gegenüberliegenden Seite einen zentralen Auslaß mit einem Durchmesser d aufweist, der zum Innendurchmesser D des zweiten Reaktors im Verhältnis 1:3 bis 1:20 steht.

9. Verfahren nach einem der Ansprüche 1 bis 8, **dadurch gekennzeichnet, daß** die Temperatur der adiabatischen Reaktion 550 bis 650°C beträgt.

10. Verfahren nach einem der Ansprüche 1 bis 9, **dadurch gekennzeichnet, daß** der Druck 1,1 bar bis 2,0 bar beträgt.

11. Verfahren nach einem der Ansprüche 1 bis 9, **dadurch gekennzeichnet, daß** der Druck 1,1 bar bis 1,4 bar beträgt.

12. Verfahren nach einem der Ansprüche 1 bis 11, **dadurch gekennzeichnet, daß** die Verweilzeit 0,2 bis 20 sec beträgt.

**13.** Verfahren nach einem der Ansprüche 1 bis 11, **dadurch gekennzeichnet, daß** die Verweilzeit 1,0 bis 10 sec beträgt.

**14.** Verfahren nach einem der Ansprüche 1 bis 13, **dadurch gekennzeichnet, daß** das molare Verhältnis von Chlorsilan zu Vinylchlorid 1:1 bis 5:1 beträgt.

**15.** Verfahren nach einem der Ansprüche 1 bis 14, **dadurch gekennzeichnet, daß** das Chlorsilan Trichlorsilan ist.

**16.** Verfahren nach einem der Ansprüche 1 bis 15, **dadurch gekennzeichnet, daß** die Edukte getrennt oder im Gemisch auf eine Temperatur von 120 bis 400°C vorerhitzt werden.

**17.** Verfahren nach einem der Ansprüche 1 bis 15, **dadurch gekennzeichnet, daß** die Edukte getrennt oder im Gemisch auf eine Temperatur von 220 bis 400°C vorerhitzt werden.

**18.** Verfahren nach einem der Ansprüche 1 bis 17, **dadurch gekennzeichnet, daß** man die heißen Reaktionsgase am Ende der zweiten Zone rasch abkühlt, indem man sie mit einer Flüssigkeit quencht.

**19.** Verfahren nach Anspruch 18, **dadurch gekennzeichnet, daß** man als Quenchflüssigkeit Trichlorsilan, Siliciumtetrachlorid, das erzeugte Vinylchlorsilan oder flüssiges Reaktionsgemisch verwendet.

**20.** Verfahren nach Anspruch 18 oder 19, **dadurch gekennzeichnet, daß** der Massenstrom der Quenchflüssigkeit das Zwei- bis Sechsfache des Massenstromes der Reaktionsgase beträgt.

**21.** Verfahren nach Anspruch 20, **dadurch gekennzeichnet, daß** die Quenchzone an die zweite Reaktionszone unmittelbar anschließt oder maximal 1,5 m vom Ausgang dieser Zone entfernt ist.

**22.** Verfahren nach einem der Ansprüche 18 bis 21, **dadurch gekennzeichnet, daß** die Quenchflüssigkeit durch eine Düse oder mehrere Düsen mit einem Durchmesser von 8 bis 25 mm in Strömungsrichtung kegelförmig in die heißen Reaktionsgase eingedüst wird.

**23.** Vorrichtung zur Durchführung des Verfahrens nach den Ansprüchen 1 bis 22, **gekennzeichnet durch** eine Kombination aus einem beheizbaren Ringspaltreaktor, einen in Strömungsrichtung daran anschließenden zweiten Reaktor mit größerer Reaktorquerschnittsfläche, wobei das Volumen dieses Reaktors sich zu dem Volumen des Ringspaltraumes wie 0,5:1 bis 1,25:1 verhält, und gegebenenfalls **durch** eine Vorrichtung zum Quenchen der heißen Reaktionsgase mit einer Flüssigkeit.

**Claims**

**1.** A process for preparing vinyl chlorosilanes by thermal, non-catalysed reaction of chlorosilanes with vinyl chloride at from 550 to 700°C using a ring-gap reactor, **characterized in that** it comprises allowing the reaction gases, after flowing through the ring-gap space, to react further adiabatically in a second zone having a greater cross-sectional area, the volume of this zone being in a ratio to the volume of the ring-gap space of from 0.15:1 to 1.5:1.

**2.** A process according to claim 1, **characterized in that** the ring-gap zone is produced by an, if appropriate, rotatable displacement body which is arranged axially symmetrically in a cylindrical tube.

**3.** A process according to claim 2, **characterized in that** the displacement body carries elements which promote the flow rate and the vortexing of the reaction gases.

**4.** A process according to claim 3, **characterized in that** the elements form a spiral or are bumps.

**5.** A process according to any one of claims 2 to 4, **characterized in that** the elements have a height which is from 60 to 80% of the width of the ring-gap zone.

**6.** A process according to any one of claims 1 to 5, **characterized in that** the ring-gap zone is from 10 to 50 mm wide.

**7.** A process according to any one of claims 1 to 5, **characterized in that** the ring-gap zone is from 20 to 50 mm wide.

8. A process according to any one of claims 1 to 7, **characterized in that** the second reaction zone has, on the side opposite to the ring-gap space of the first reactor, a central outlet having a diameter d which is in a ratio to the internal diameter D of the second reactor of from 1:3 to 1:20.

9. A process according to any one of claims 1 to 8, **characterized in that** the temperature of the adiabatic reaction is from 550 to 650°C.

10. A process according to any one of claims 1 to 9, **characterized in that** the pressure is from 1.1 bar to 2.0 bar.

11. A process according to any one of claims 1 to 9, **characterized in that** the pressure is from 1.1 bar to 1.4 bar.

12. A process according to any one of claims 1 to 11, **characterized in that** the residence time is from 0.2 to 20 seconds.

13. A process according to any one of claims 1 to 11 **characterized in that** the residence time is from 1.0 to 10 seconds.

14. A process according to any one of claims 1 to 13, **characterized in that** the molar ratio of chlorosilane to vinyl chloride is from 1:1 to 5:1.

15. A process according to any one of claims 1 to 14, **characterized in that** the chlorosilane is trichlorosilane.

16. A process according to any one of claims 1 to 15, **characterized in that** the starting materials are preheated separately or in a mixture to a temperature of from 120 to 400°C.

17. A process according to any one of claims 1 to 15, **characterized in that** the starting materials are preheated separately or in a mixture to a temperature of from 220 to 400°C.

18. A process according to any one of claims 1 to 17, **characterized in that** the hot reaction gases are rapidly cooled at the end of the second zone by quenching them with a liquid.

19. A process according to claim 18, **characterized in that** trichlorosilane, silicon tetrachloride, the vinyl chlorosilane produced or liquid reaction mixture is used as quenching liquid.

20. A process according to claim 18 or 19, **characterized in that** the mass flow rate of the quenching liquid is from two to six times the mass flow rate of the reaction gases.

21. A process according to claim 20, **characterized in that** the quenching zone is connected directly to the second reaction zone or is a maximum of 1.5 m from the outlet of this zone.

22. A process according to any one of claims 18 to 21, **characterized in that** the quenching liquid is injected into the hot reaction gases in a conical shape in the direction of flow by a nozzle or plurality of nozzles having a diameter of from 8 to 25 mm.

23. An apparatus for carrying out the process according to claims 1 to 22, **characterized by** a combination of a heatable ring-gap reactor, a second reactor which follows this, in the direction of flow, and has a greater reactor cross-sectional area, the volume of this reactor being in a ratio to the volume of the ring-gap space of from 0.5:1 to 1.25:1 and, if appropriate, by an apparatus for quenching the hot reaction gases with a liquid.

**Revendications**

1. Procédé pour la préparation de vinylchlorosilanes par transformation thermique, non catalysée de chlorosilanes avec du chlorure de vinyle à 550 jusqu'à 700°C avec utilisation d'un réacteur à fente annulaire, **caractérisé en ce qu'**on laisse continuer la réaction de manière adiabatique dans les gaz de réaction après leur traversée de la chambre à fente annulaire, dans une deuxième zone de plus grande section, le volume de cette zone étant dans un rapport de 0,15:1 à 1,5:1 au volume de la chambre à fente annulaire.

2. Procédé selon la revendication 1, **caractérisé en ce que** la zone à fente annulaire est obtenue par un corps de refoulement, le cas échéant rotatif, disposé de manière symétrique par rapport à l'axe dans un tuyau cylindrique.

3. Procédé selon la revendication 2, **caractérisé en ce que** le corps de refoulement porte des éléments qui favorisent la vitesse d'écoulement et le brassage des gaz de réaction.

4. Procédé selon la revendication 3, **caractérisé en ce que** les éléments forment une spirale ou sont des boutons.

5. Procédé selon l'une quelconque des revendications 2 à 4, **caractérisé en ce que** les éléments présentent une hauteur qui représente 60 à 80% de la largeur de la zone à fente annulaire.

6. Procédé selon l'une quelconque des revendications 1 à 5, **caractérisé en ce que** la zone à fente annulaire présente une largeur de 10 à 50 mm.

7. Procédé selon l'une quelconque des revendications 1 à 5, **caractérisé en ce que** la zone à fente annulaire présente une largeur de 20 à 50 mm.

8. Procédé selon l'une quelconque des revendications 1 à 7, **caractérisé en ce que** la deuxième zone de réaction présente sur son côté face à la chambre à fente annulaire du premier réacteur une ouverture centrale présentant un diamètre d qui est dans un rapport 1:3 à 1:20 au diamètre intérieur D du deuxième réacteur.

9. Procédé selon l'une quelconque des revendications 1 à 8, **caractérisé en ce que** la température de la réaction adiabatique est de 550 à 650°C.

10. Procédé selon l'une quelconque des revendications 1 à 9, **caractérisé en ce que** la pression est de 1,1 bar à 2,0 bars.

11. Procédé selon l'une quelconque des revendications 1 à 9, **caractérisé en ce que** la pression est de 1,1 bar à 1,4 bar.

12. Procédé selon l'une quelconque des revendications 1 à 11, **caractérisé en ce que** le temps de séjour est de 0,2 à 20 secondes.

13. Procédé selon l'une quelconque des revendications 1 à 11, **caractérisé en ce que** le temps de séjour est de 1,0 à 10 secondes.

14. Procédé selon l'une quelconque des revendications 1 à 13, **caractérisé en ce que** le rapport molaire de chlorosilane à chlorure de vinyle est de 1:1 à 5:1.

15. Procédé selon l'une quelconque des revendications 1 à 14, **caractérisé en ce que** le chlorosilane est le trichlorosilane.

16. Procédé selon l'une quelconque des revendications 1 à 15, **caractérisé en ce que** les produits de départ sont préchauffés séparément ou en mélange à une température de 120 à 400°C.

17. Procédé selon l'une quelconque des revendications 1 à 15, **caractérisé en ce que** les produits de départ sont préchauffés séparément ou en mélange à une température de 220 à 400°C.

18. Procédé selon l'une quelconque des revendications 1 à 17, **caractérisé en ce qu'**on refroidit rapidement les gaz de réaction chauds à la fin de la deuxième zone, en les refroidissant brusquement avec un liquide.

19. Procédé selon la revendication 18, **caractérisé en ce qu'**on utilise comme liquide de refroidissement brusque du trichlorosilane, du tétrachlorure de silicium, le vinylchlorosilane produit ou du mélange réactionnel liquide.

20. Procédé selon les revendications 18 ou 19, **caractérisé en ce que** le flux massique du liquide de refroidissement brusque représente deux à six fois le flux massique des gaz de réaction.

21. Procédé selon la revendication 20, **caractérisé en ce que** la zone de refroidissement brusque est directement consécutive à la deuxième zone de réaction ou distante d'au maximum 1,5 m de la sortie de cette zone.

22. Procédé selon l'une quelconque des revendications 18 à 21, **caractérisé en ce que** le liquide de refroidissement

brusque est pulvérisé via un gicleur ou plusieurs gicleurs présentant un diamètre de 8 à 25 mm dans le sens de l'écoulement, en forme conique, dans les gaz de réaction chauds.

**23.** Dispositif pour réaliser le procédé selon l'une quelconque des revendications 1 à 22, **caractérisé par** une combinaison d'un réacteur à fente annulaire pouvant être chauffé, un deuxième réacteur consécutif à celui-ci dans le sens de l'écoulement, présentant une aire de section transversale de réacteur plus grande, le volume de ce réacteur se trouvant dans un rapport de 0,5:1 à 1,25:1 au volume de la chambre à fente annulaire et le cas échéant d'un dispositif pour le refroidissement brusque des gaz de réaction chauds avec un liquide.

Figur 1

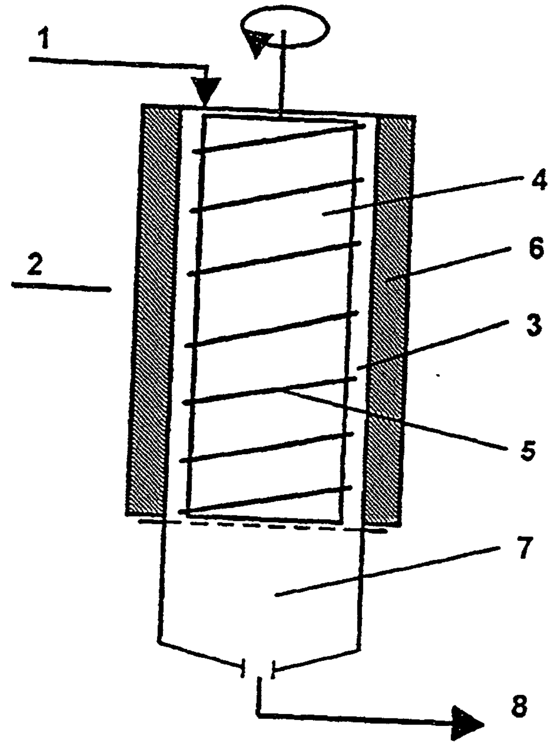


Figur 2